**Europäisches Patentamt**

**European Patent Office**

**Office européen des brevets**

(11) Publication number: **0 203 472**
**B1**

# (12) EUROPEAN PATENT SPECIFICATION

(45) Date of publication of patent specification: **01.08.90**

(51) Int. Cl.⁵: **H 02 H 3/05, H 02 H 3/38**

(21) Application number: **86106641.3**

(22) Date of filing: **15.05.86**

---

(54) Method for obtaining a backup function for a digital distance relay and relay to carry out the method.

---

(30) Priority: **22.05.85 SE 8502508**

(43) Date of publication of application:
**03.12.86 Bulletin 86/49**

(45) Publication of the grant of the patent:
**01.08.90 Bulletin 90/31**

(84) Designated Contracting States:
**CH DE FR GB IT LI**

(56) References cited:
**DE-A-2 932 929**

**BROWN BOVERI REVIEW, vol. 72, no. 1, January
1985, pages 32-36, CH; O.E. LANZ et al.: "LR91 -
an ultra high-speed directional comparison
relay for protection of high-voltage
transmission lines"**

(73) Proprietor: **ASEA AB**
**S-721 83 Västeras (SE)**

(72) Inventor: **Andersson, Finn**
**Högviltsvägen 1**
**S-722 42 Västeras (SE)**
Inventor: **Apèll, Gert**
**Fjärdhundragatan 23A**
**S-722 41 Västeras (SE)**
Inventor: **Brandt, Nils**
**Släggkastargatan 5**
**S-722 40 Västeras (SE)**

(74) Representative: **Boecker, Joachim, Dr.-Ing.**
**Rathenauplatz 2-8**
**D-6000 Frankfurt a.M. 1 (DE)**

Courier Press, Leamington Spa, England.

## Description

The invention relates to a method for obtaining a backup function for a digital distance relay according to the precharacterising part of claim 1 and a digital distance relay for carrying out the method.

A distance protection device or distance relay is used as protection in the case of short-circuits and ground faults for overhead transmission lines and cables in power supply systems. Nowadays, such protection devices are normally formed with static semiconductor components and made with digital technique in start relays, measuring circuits, phase selection circuits, timing circuits and tripping circuits, which involves very short operating times.

By way of introduction, the principle of operation of a modern distance relay will first be described. The distance relay is connected to transformers for measuring the currents and voltages of the line. On the basis of the amplitudes and phase positions of these quantities, the line impedance can be determined in the desired direction from the measuring point of the measuring transformers of the distance relay. These impedance values are then compared with the region of operation, set in the distance relay, in the impedance plane. The outer limit of the region of operation indicates the smallest impedance value the line is allowed to have during normal operation. When the line impedance lies within the region of operation, a fault is present on the line and the distance relay is to deliver a tripping pulse to the circuit-breakers.

The region of operation is often made in the form of a quadrangle in the impedance plane (R-X-plane), and the range of the region in the resistive and the reactive direction can normally be set individually.

The region of operation of the distance relay can also be extended in settable, time-dependent steps, whereby a backup protective function based on time selectivity is obtained. In this way, a distance relay can comprise several protective or measuring zones. Broadly, this functions in such a way that, for example, the distance relay operates instantaneously for faults within a line section emanating from the measuring point. Within a second measuring zone, which comprises the line section of the first zone plus an additional line section, the distance relay operates after a certain, set time. Within a third measuring zone, comprising measuring zone number two and a further additional line section, operation is obtained in the event of a fault after an additional time delay, and so on.

The distance relays normally also have a direction sensing function. A line which is fed from a plurality of stations can therefore be protected both against faults located ahead and against faults located behind the measuring point (for example a station) in relation to a defined measuring direction. Therefore, distance relays located at respective ends of the line section also need to communicate with each other.

As mentioned above, distance relays are nowadays often constructed from static components and with digital technique controlled by a microprocessor. Even if both such components and such microprocessors have a high reliability, faults or missing operations cannot, of course, be entirely avoided. Since a missing operation in the event of a line fault may have significant consequences, various ways of obtaining redundancy have been attempted.

Redundancy is often obtained by the provision of parallel-operating protective relays having largely the same functions, possibly with different measuring principles, etc. Sometimes, parallel protective relays from different suppliers or relays having operating times of different duration are selected.

Another way of providing protection against a missing function in a distance relay is to carry out test sequences of the tripping function. This can be done by means of external test equipment or by a self monitoring or self testing built into the distance relay.

Testing of the functions of the distance relay can be performed at specified time intervals or according to other criteria, for example when the load conditions indicate stable conditions.

Although the test times can be held short and although different more or less intelligent methods have been developed for determining these test times, the fact remains that a line fault occurring during a test time cannot be discovered. This entails an undesired uncertainty as regards the total function of the distance relay, which may be felt to be inconvenient.

While the Brown Boveri Review, vol. 72, no. 1, January 1985, pp. 32-36 (in particular p. 36) discloses the idea of continuous self-testing of a digital relay without interrupting its protective function, it does not specify how this is achieved.

The invention aims at the development of a method for obtaining a backup function for a digital distance relay of the above-mentioned kind that ensures discovery of line faults also during time intervals, in which the signal processing of the distance relay is tested. The invention also aims at developing a digital distance relay for carrying out the method.

To achieve this aim the invention suggests a method according to the introductory part of claim 1, which is characterized by the features of the characterizing part of claim 1.

Further developments of the method according to the invention are characterized by the features of the subclaims 2 to 7.

A digital distance relay for carrying out the method according to the invention is characterized by the features of 8.

Further developments of the distance relay are characterized by the features of the subclaims 9 - 14.

The components to carry out the method according to the invention may preferably be included as an integral part in the distance relay.

The invention thus provides a reliable method for obtaining a backup function for digital distance relays in the case of faults in the digital signal processing and/or in the case of faults discovered during automatic testing.

The method according to the invention discloses a new concept for redundancy for the above-mentioned type of protection devices. Protective relays in general and distance relays in particular are positioned, with their respective measuring units for quantities to be monitored, on-line in order to be able to exert an influence more or less directly on tripping or blocking functions in the event that the fault level is exceeded. As mentioned above, however, this direct tripping or blocking possibility does not exist during testing of the various parts of the protection device.

The new concept according to the invention means that instead of being directly on-line for tripping or blocking, the distance relay continuously tests the digital signal processing via a central control unit.

According to known technique, measurement signals from the various measuring zones of a protective relay shall be passed to and be available in the central control unit via a normal databus. In addition to these normal measurement signals, the central control unit, starting elements and/or measuring elements shall be provided with additional fixed signals which are activated when a critical change, detected by the normal measuring units, has taken place in the power supply system.

The central control unit, which — as mentioned above — continuously tests the signal processing, is switched over from testing to the conventional measuring process for selective treatment of a fault condition in the power supply system when any of these fixed signals indicates a critical change in the network. As mentioned above, the measurement signals are available directly.

When a fault has been detected on the network, the circuit-breakers have been triggered, the fault has been eliminated and the network has again become stable, the distance relay resumes continuous testing of the digital signal processing by the central control unit.

If, during the testing, a fault is discovered within the distance relay, the invention incorporates the activation of an alarm function, whereby measures for removing the fault can be initiated. With the aid of the additional fixed signals, which are activated when a critical change has occurred in the power supply system, tripping and blocking functions can be obtained also in the case of faults in the digital signal processing, because these signals — directly or via time-lag circuits — activate the protective function.

According to the invention, the central control unit also takes care of the testing of the measuring elements of the three measuring zones at regularly recurring time intervals via the databus. During testing of measuring elements, the measuring elements of one zone at a time are tested, whereby this zone is blocked. When a fault is detected in any measuring element during the test time, this measuring element remains blocked and an alarm signal is actuated, whereby measures for fault removal can be initiated. If, during such blocking, a fault is detected on the network, the central control unit — as mentioned above — will be switched over from testing to the conventional measuring process for selective treatment of the fault condition — but with one important change. If one of the zones is blocked, another zone is given the same function as the blocked one. In this way, a redundancy is obtained even if one of the zones is not available.

The new principle of redundancy according to the invention permits greater availability in connection with testing and in the case of faults discovered than can be obtained with conventional redundancy methods.

The possibility of building the redundancy into and integrating it with the distance relay, in the manner described above, results in simpler manufacture and installation and a simpler redundancy system in comparison with conventional redundancy methods; also, the total cost for obtaining satisfactory redundancy is lower.

The invention will now be described in greater detail with reference to the accompanying drawings showing — by way of example — in

Figure 1 a device for carrying out the method according to the invention,

Figure 2 the regions of operation of a distance relay in an R-X plane with three measuring zones.

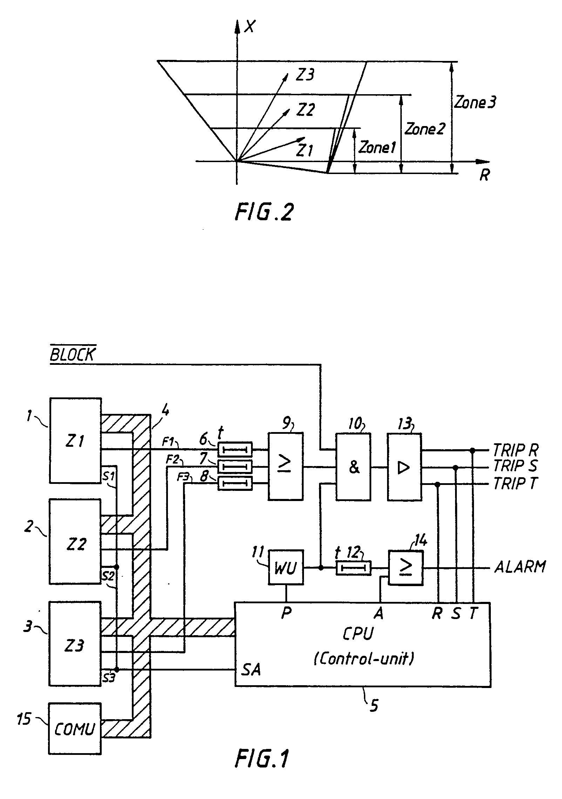

Figure 2 shows in impedance plane a typical region of operation for three zones of a transmission line, according to prior art technique. If current and voltage measurement indicate that the line impedance lies within any of zones 1, 2 or 3 — for example, that the impedance Z1, Z2 or Z3 according to Figure 2 can be identified — according to known technique time-selective information about this is obtained, which after associated digital signal processing in the central control unit leads to tripping of a circuit breaker, etc.

In Figure 1 the units 1, 2 and 3 have been symbolically marked Z1, Z2 and Z3, respectively. The intention with this is to indicate that output signals from units Z1, Z2 and Z3, respectively, constitute the signals which are obtained when the distance relay determines a fault in the respective zone 1, 2 or 3. The units will therefore be designated below as the measurement signal units. Output signals are sluiced via the databus 4 to the central control unit 5, designated CPU. If in the case of faultless signal processing in CPU, a critical fault on the network has been determined, tripping signals based on measured values via the databus will be sent to the circuit-breakers for the faulty phases in question via the CPU output RST.

From the measurement signal units 1, 2 and/or 3, fixed signals can also be obtained, which are activated when a critical change has occurred in the power supply system. The activation may, for example, occur

when a phase current exceeds a certain value,

when the zero sequence current exceeds a certain value, or

when the impedance of the line to be protected lies within zone 1, 2 or 3.

These fixed signals F1, F2 and F3 are passed via time-lag elements 6, 7 and 8 to an OR-element 9. When any of signal F1, F2 or F3 has been activated, a signal is thus obtained on the output of the OR-element 9, which signal is passed to one of the inputs of an AND-element 10. To this AND-element 10 there is also supplied a signal BLOCK if the system is not blocked.

From each of the measurement signal units 1, 2 and 3, there is obtained an additional fixed signal S1, S2 and S3 when the same critical change in the power supply system has occurred as that which activates signal F1, F2 or F3. The lines for the signals S1, S2 and S3 are jointly passed to a start input SA of the CPU 5.

The CPU 5 is designed to generate a pulse train, which is led from an output P to a monitoring unit 11, designated WU (watch dog unit), as long as a faultless state exists in the digital processing part of the distance relay. In this state, the output of WU 11 is reset to zero.

CPU 5 is also designed to continuously test the digital signal processing circuits of the distance relay which are included in CPU 5. This testing continues as long as none of start signals S1, S2 or S3 is present, that is, as long as there is no input signal on the input SA of CPU 5.

If the testing shows a fault existing in the digital signal processing part of CPU 5, the pulse train to WU 11 terminates causing a signal to appear on the output of WU 11. After a certain time lag determined by the time lag element 12, an alarm is triggered and the nature and location of the fault can be presented on a display (not shown).

The output of WU 11 is also connected to one of the inputs of AND-element 10. This means that if, during the duration of a fault in the signal processing part of CPU 5, a critical change occurs in the power supply network, this will lead to tripping — TRIP — of all phases since all the inputs of AND-element 10 have input signals. The amplifier 13 makes it possible to drive somewhat more power-demanding tripping functions.

If, during the faultless state in the digital signal processing part, a critical fault on the power supply system occurs, a signal is obtained on the input SA of CPU 5. The pulse train to WU 11 will continue, and the AND-element 10 remains blocked. Under these conditions, a start signal to input SA of CPU implies that the information about the condition of the network, which arrives via the databus 4, now becomes available to the digital signal processing which, if the determined line impedance lies within any of the regions of operation, will result in tripping of the circuit-breaker(s) in question.

As mentioned in the introductory part of this description, also the measurement signal units 1, 2 and 3 of the zones are tested. If a fault is detected in any of these units, CPU 5 will trigger an alarm function via an output A and an OR-element 14.

As indicated with respect to the prior art, distance relays located at respective ends of the line or the line section need to communicate with each other with respect to the measured line impedance and so on. Modern distance relays therefore include a so-called communication unit 15, labelled COMU in Figure 1. CPU 5 processes the information from COMU 15 together with the information from measurement signal units 1, 2, 3 so as to obtain correct tripping signals.

According to the invention, a device for carrying out the method can be formed in many similar ways within the scope of the appended claims.

**Claims**

1. Method for obtaining a backup function for a digital distance relay in the case of faults in the signal processing of said distance relay comprising a central control unit (5), a databus (4), measurement signal units (1, 2, 3) for generating measurement signals from the different measuring zones (Z1, Z2, Z3) of the distance relay in a power supply system, characterized in that the signal processing of the distance relay is continuously tested by the central control unit (5) to ensure its faultless operation, that, if during faultless condition of said signal processing a critical change occurs in the power supply system which may need to be acted upon, a first fixed signal (S1, S2, S3) in the form of a start signal is activated in the measurement signal unit(s) (1, 2, 3) in question and is passed to the central control unit (SA) causing the latter to be switched over from test function to distance relay function with measurement signals obtained from the measurement signal units via the databus (4), and that one or more tripping function(s) (TRIP R, TRIP S, TRIP T) is/are obtained from the central control unit (R, S, T).

2. Method according to claim 1 wherein the distance relay also comprises a monitoring unit (11), a first time lag unit (12) and a first OR-element (14), characterized in that in the case of a fault condition in the signal processing in the central control unit, an alarm signal (ALARM) is obtained from the central control unit (P) via said monitoring unit, said first time lag unit and said first OR-element.

3. Method according to claim 1 or 2, characterized in that in the case of a fault condition in the signal processing in any of the measurement signal units, the tasks of the faulty measurement signal unit are assumed by the measurement signal unit for an adjacently positioned measuring zone.

4. Method according to any of the preceding claims, characterized in that in the case of a fault condition in the signal processing in any of the measurement signal units, the faulty measurement signal unit is blocked via the central control unit.

5. Method according to claim 2, characterized in that in the case of a fault condition in the signal processing in any of the measurement signal units, an alarm signal (ALARM) is actuated via the central control unit (A) and the first OR-element (14).

6. Method according to any of the preceding claims, characterized in that when a critical change, which may need to be acted upon, occurs in the power supply system, a second fixed signal (F1, F2, F3) is activated in the measurement signal unit(s) in question.

7. Method according to claim 6, wherein the distance relay also comprises a second, third and fourth time lag unit (6, 7, 8), a second OR-element (9), an AND-element (10), an amplifier (13) and a unit delivering an inverted blocking signal (BLOCK), characterized in that when a second fixed signal is present during the time after a fault has been detected in the signal processing in the central control unit (5) and until this fault has been removed, a tripping function (TRIP R, TRIP S, TRIP T) is obtained from the distance relay via the second, third and/or fourth time lag units, the second OR-element and the amplifier (13).

8. Digital distance relay for carrying out the method according to any of the preceding claims comprising a central control unit (5), a databus (4) and measurement signal units (1, 2, 3) for generating measurement signals from the different measuring zones (Z1, Z2, Z3) of the distance relay in a power supply system, characterized in that the central control unit (5) is arranged to continuously test the signal processing of the distance relay to ensure its faultless operation, that the measurement signal units (1, 2, 3) are arranged to generate a first fixed signal (S1, S2, S3) if, in case of faultless operation of the signal processing of the distance relay, a critical change occurs in the power supply system which may have to be acted upon, that said first fixed signal is arranged to be supplied to the central control unit, said unit being arranged to switch over from test function to distance relay function with measurement signals from the measurement signal units obtained via the databus (4), and to generate one or more tripping functions (TRIP R, TRIP S, TRIP T).

9. Distance relay according to claim 8, wherein the distance relay also comprises a monitoring unit (11), a first time lag unit (12) and a first OR-element (14), characterized in that the central control unit is arranged to deliver an alarm signal (ALARM) via the monitoring unit, the first time lag unit and the first OR-element, if a fault condition occurs in the signal processing in the central control unit.

10. Distance relay according to claim 8 or 9, characterized in that each measurement signal unit is arranged to take over the function of the measurement signal unit of an adjacent measuring zone if a fault condition occurs in the signal processing of the last-mentioned measurement signal unit.

11. Distance relay according to any of claims 8 to 10, characterized in that the central control unit is arranged to block any measurement signal unit that should suffer a fault condition in its signal processing.

12. Distance relay according to any of claims 8 to 11, characterized in that the central control unit is arranged to deliver an alarm signal (ALARM) via said first OR-element if a fault condition occurs in the signal processing of any of the measurement signal units.

13. Distance relay according to any of the preceding claims 8 to 12, characterized in that the measurement signal units are arranged to generate a second fixed signal (F1, F2, F3) if, in case of a faultless state in the signal processing of the distance relay, a critical change, which may need to be acted upon, occurs in the power supply system.

14. Distance relay according to claim 13, characterized in that the distance relay also comprises a second, third and fourth time lag unit (6, 7, 8), a second OR-element (9), an AND-element (10), an amplifier (13) and a unit that delivers an inverted blocking signal (BLOCK), and that the distance relay is arranged to deliver a tripping function (TRIP R, TRIP S, TRIP T) via the second, third and/or fourth time lag units, the second OR-element, the AND-element and the amplifier, if a second fixed signal is present during the time after a fault has been detected in the signal processing in the central control unit and until this fault has been removed.

**Patentansprüche**

1. Verfahren zur Schaffung einer Reservefunktion für ein digitales Distanzrelais für den Fall eines Fehlers in der Signalverarbeitung in dem Distanzrelais mit einer zentralen Steuereinheit (5), einem Datenbus (4), Meßsignalgliedern (1, 2, 3) zur Erzeugung von Meßsignalen für die verschiedenen Meßzonen (Z1, Z2, Z3) des Distanzrelais in einem Stromverteilungssystem, dadurch gekennzeichnet, daß die Signalverarbeitung des Distanzrelais kontinuierlich durch die zentrale Steuereinheit (5) zur Sicherstellung ihres fehlerfreien Arbeitens überwacht wird, daß, wenn im fehlerfreien Zustand der genannten Signalverarbeitung eine kritische Änderung in dem Stromversorgungssystem auftritt, welche eine Reaktion erfordert, ein erstes festes Signal (S1, S2, S3) in Form eines Startsignals in dem/den entsprechenden Meßsignalglied/ern (1, 2, 3) ausgelöst wird und der zentralen Steuereinheit (SA) zugeführt wird, wodurch letztere aus der Überprüfungsfunktion umgeschaltet wird in die Distanzrelaisfunktion für Meßsignalen, die von den Meßsignalgliedern über den Datenbus (4) geliefert werden, und daß eine oder mehrere Auslösungsfunktionen (TRIP R, TRIP S, TRIP T) von der zentralen Steuereinheit (RST) geliefert werden.

2. Verfahren nach Anspruch 1, bei welchem das Distanzrelais auch eine Überwachungseinheit (11), ein erstes Zeitverzögerungsglied (12) und ein erstes ODER-Glied (14) enthält, dadurch gekennzeichnet, daß im Falle eines Fehlers bei der Signalverarbeitung in der zentralen Steuereinheit ein Alarmsignal (ALARM) von der zentralen Steuereinheit (P) über die genannte Überwachungseinheit, das erste Zeitverzögerungsglied und das erste ODER-Glied geliefert wird.

3. Verfahren nach einem der Ansprüche 1 oder 2, dadurch gekennzeichnet, daß im Falle eines Fehlers bei der Signalverarbeitung in irgendeinem der Meßsignalglieder die Aufgaben des fehlerhaften Meßsignalgliedes von dem Meßsignalglied einer benachbarten Meßzone übernommen werden.

4. Verfahren nach einem der vorhergehenden Ansprüche, dadurch gekennzeichnet, daß im Falle eines Fehlers bei der Signalverarbeitung in irgendeinem der Meßsignalglieder das fehlerhafte Meßsignalglied durch die zentrale Steuereinheit gesperrt wird.

5. Verfahren nach Anspruch 2, dadurch gekennzeichnet, daß im Falle eines Fehlers bei der Signalverarbeitung in irgendeinem der Meßsignalglieder ein Alarmsignal (ALARM) durch die zentrale Steuereinheit (A) und das erste ODER-Glied (14) ausgelöst wird.

6. Verfahren nach einem der vorhergehenden Ansprüche, dadurch gekennzeichnet, daß, wenn im fehlerfreien Zustand der genannten Signalverarbeitung eine kritische Änderung in dem Stromversorgungssystem auftritt, welche eine Reaktion erfordert, ein zweites festes Signal (F1, F2, F3) in dem/den betroffenen Meßsignalglied/er ausgelöst wird.

7. Verfahren nach Anspruch 6, bei welchem das Distanzrelais auch ein zweites, drittes und viertes Zeitverzögerungsglied (6, 7, 8), ein zweites ODER-Glied (9), ein UND-Glied (10), einen Verstärker (13) und eine Einheit, die ein invertiertes Sperrsignal (BLOCK) liefert, enthält, dadurch gekennzeichnet, daß, wenn zweites festes Signal in der Zeitspanne zwischen der Entdeckung eines Fehlers bei der Signalverarbeitung in der zentrale Steuereinheit (5) und der Beseitigung dieses Fehlers auftritt, eine Auslösefunktion (TRIP R, TRIP S, TRIP T) von dem Distanzrelais über das zweite, dritte und/oder vierte Zeitverzögerungsglied, das zweite ODER-Glied und den Verstärker (13) geliefert wird.

8. Digitales Distanzrelais zur Durchführung des Verfahrens nach einem der vorhergehenden Ansprüche mit einer zentralen Steuereinheit (5), einem Datenbus (4) und Meßsignalgliedern (1, 2, 3) zur Erzeugung von Meßsignalen für die verschiedenen Meßzonen (Z1, Z2, Z3) des Distanzrelais in einem Stromverteilungssystem, dadurch gekennzeichnet, daß die zentrale Steuereinheit (5) kontinuierlich die Signalverarbeitung des Distanzrelais zur Sicherstellung ihres fehlerfreien Arbeitens zu überwachen vermag, daß die Meßsignalglieder (1, 2, 3) derart angeordnet sind, daß, wenn im Falle einer fehlerfreien Arbeitsweise der Signalverarbeitung des Distanzrelais eine kritische Änderung in dem Stromversorgungssystem auftritt, welche eine Reaktion erfordern könnte, das genannte erste feste Signal der zentralen Steuereinheit zugeführt wird, welche imstande ist, von der Überprüfungsfunktion umzuschalten in die Distanzrelaisfunktion für Meßsignalen, die von den Meßsignalgliedern über den Datenbus (4) geliefert werden, und eine oder mehrere Auslösungsfunktionen (TRIP R, TRIP S, TRIP T) zu liefern.

9. Distanzrelais nach Anspruch 8, wobei das Distanzrelais auch eine Überwachungseinheit (11), ein erstes Zeitverzögerungsglied (12) und ein erstes ODER-Glied (14) enthält, dadurch gekennzeichnet, daß die zentrale Steuereinheit imstande ist, im Falle eines Fehlers bei der Signalverarbeitung in der zentralen Steuereinheit ein Alarmsignal (ALARM) über die Überwachungseinheit, das erste Zeitverzögerungsglied und das erste ODER-Glied zu liefern.

10. Distanzrelais nach einem der Ansprüche 8 oder 9, dadurch gekennzeichnet, daß jedes Meßsignalglied imstande ist, die Funktion des Meßsignalgliedes einer benachbarten Meßzone zu übernehmen, wenn ein Fehler bei der Signalverarbeitung im zuletzt genannten Meßsignalglied auftritt.

11. Distanzrelais nach einem der Ansprüche 8 bis 10, dadurch gekennzeichnet, daß die zentrale Steuereinheit imstande ist, jedes Meßsignalglied, welches unter einem Fehler bei seiner Signalverarbeitung leidet, zu sperren.

12. Distanzrelais nach einem der Ansprüche 8 bis 11, dadurch gekennzeichnet, daß die zentrale Steuereinheit imstande ist, über das genannte erste ODER-Glied ein Alarmsignal (ALARM) zu liefern, wenn ein Fehler bei der Signalverarbeitung in einem Meßsignalglied auftritt.

13. Distanzrelais nach einem der Ansprüche 8 - 12, dadurch gekennzeichnet, daß die Meßsignalglieder imstande sind, ein zweites festes Signal (F1, F2, F3) zu erzeugen, wenn im fehlerfreien Zustand der genannten Signalverarbeitung eine kritische Änderung in dem Stromversorgungssystem auftritt, welche eine Reaktion erfordern könnte.

14. Distanzrelais nach Anspruch 13, dadurch gekennzeichnet, daß das Distanzrelais auch ein zweites, drittes und viertes Zeitverzögerungsglied (6, 7, 8), ein zweites ODER-Glied (9), ein UND-Glied (10), einen Verstärker (13) und eine Einheit, die ein invertiertes Sperrsignal (BLOCK) liefert, enthält und daß das Distanzrelais imstande ist, eine Auslösefunktion (TRIP R, TRIP S, TRIP T) über das zweite, dritte und/oder vierte Zeitverzögerungsglied, das zweite ODER-Glied und den Verstärker (13) zu liefern, wenn ein zweites festes Signal in der Zeitspanne zwischen der Entdeckung eines Fehlers bei der Signalverarbeitung in der zentrale Steuereinheit (5) und der Beseitigung dieses Fehlers auftritt.

## Revendications

1. Procédé pour obtenir une fonction de réserve pour un relais de distance numérique dans le cas de défauts dans le traitement de signal du relais de distance, comprenant une unité de commande centrale (5), un bus de données (4), des éléments de génération de signaux de mesure (1, 2, 3) destinés à produire des signaux de mesure à partir des différentes zones de mesure (Z1, Z2, Z3) du relais de distance dans un système de distribution d'énergie électrique, caractérisé en ce que le traitement de signal du relais de distance est continuellement testé par l'unité de commande centrale (5) pour garantir son fonctionnement correct, en ce que si pendant une condition correcte du traitement de signal, il se produit dans le système de distribution d'énergie électrique un changement critique qui peut nécessiter une action, un premier signal fixé (S1, S2, S3) sous la forme d'un signal de démarrage, est activé dans le ou les éléments de génération de signaux de mesure considérés (1, 2, 3), et ce signal est transmis à l'unité de commande centrale (SA), ce qui a pour effet de commuter cette derniére de la fonction de test vers la fonction de relais de distance, avec des signaux de mesure obtenus à partir des éléments de génération de signaux de mesure, par l'intermédiaire du bus de données (4), et en ce qu'une ou plusieurs fonctions de déclenchement (TRIP R, TRIP S, TRIP T) sont mises en oeuvre par l'unité de commande centrale (R, S, T).

2. Procédé selon la revendication 1, dans lequel le relais de distance comprend également une unité de contrôle (11), une première unité de retard (12) et un premier élément OU 14, caractérisé en ce que dans le cas d'une condition de défaut dans le traitement de signal dans l'unité de commande centrale, un signal d'alarme (ALARM) est obtenu à partir de l'unité de commande centrale (P), par l'intermédiaire de l'unité de contrôle, de la première unité de retard et du premier élément OU.

3. Procédé selon la revendication 1 ou 2, caractérisé en ce que dans le cas d'une condition de défaut dans le traitement de signal dans l'un quelconque des éléments de génération de signaux de mesure, les tâches de l'unité de génération de signaux de mesure défectueuse sont accomplies par l'unité de génération de signaux de mesure qui est relative à une zone de mesure adjacente.

4. Procédé selon l'une quelconque des revendications précédentes, caractérisé en ce que dans le cas d'une condition de défaut dans le traitement de signal dans l'un quelconque des éléments de génération de signaux de mesure, l'élément de génération de signaux de mesure défectueux est bloqué par l'intermédiaire de l'unité de commande centrale.

5. Procédé selon la revendication 2, caractérisé en ce que dans le cas d'une condition de défaut dans le traitement de signal dans l'un quelconque des éléments de génération de signaux de mesure, un signal d'alarme (ALARM) est produit par l'intermédiaire de l'unité de commande centrale (A) et du premier élément OU (14).

6. Procédé selon l'une quelconque des revendications précédentes, caractérisé en ce que lorsqu'un changement critique, qui peut nécessiter une action, se produit dans le système de distribution d'énergie électrique, un second signal fixé (F1, F2, F3) est activé dans le ou les éléments de génération de signaux de mesure considérés.

7. Procédé selon la revendication 6, dans lequel le relais de distance comprend également des seconde, troisième et quatrième unités de retard (6, 7, 8), un second élément OU (9), un élément ET (10), un amplificateur (13) et un élément qui fournit un signal de blocage inversé ($\overline{\text{BLOCK}}$), caractérisé en ce que lorsqu'un second signal fixé est présent après qu'un défaut a été détecté dans le traitement de signal dans l'unité de commande centrale (5), et jusqu'à ce que ce défaut soit éliminé, une fonction de déclenchement (TRIP R, TRIP S, TRIP T) est mise en oeuvre par le relais de distance, par l'intermédiaire des seconde, troisième et/ou quatrième unités de retard, du second élément OU et de l'amplificateur (13).

8. Relais de distance numérique destiné à mettre en oeuvre le procédé selon l'une quelconque des revendications précédentes, comprenant une unité de commande centrale (5), un bus de données (4) et des éléments de génération de signaux de mesure (1, 2, 3), pour produire des signaux de mesure à partir des différentes zones de mesure (Z1, Z2, Z3) du relais de distance dans un système de distribution d'énergie électrique, caractérisé en ce que l'unité de commande centrale (5) est conçue de façon à tester continuellement le traitement de signal du relais de distance, pour garantir son fonctionnement correct, en ce que les éléments de génération de signaux de mesure (1, 2, 3) sont conçus pour générer un premier signal fixé (S1, S2, S3) si, dans le cas où le traitement de signal du relais de distance se déroule correctement, il se produit dans le système de distribution d'énergie électrique un changement critique qui peut nécessiter une action, en ce que le premier signal fixé est appliqué à l'unité de commande centrale, cette unité étant conçue pour commuter de la fonction de test vers la fonction de relais de distance, avec des signaux de mesure provenant des éléments de génération de signaux de mesure et obtenus par l'intermédiaire du bus de données (4), et à mettre en oeuvre une ou plusieurs fonctions de déclenchement (TRIP R, TRIP S, TRIP S).

9. Relais de distance selon la revendication 8, ce relais de distance comprenant également une unité de contrôle (11), une première unité de retard (12) et un premier élément OU (14), caractérisé en ce que l'unité de commande centrale est conçue de façon à fournir un signal d'alarme (ALARM) par l'intermédiaire de l'unité de contrôle, de la première unité de retard et du premier élément OU, si une condition de défaut se produit dans le traitement de signal dans l'unité de commande centrale.

10. Relais de distance selon la revendication 8 ou 9, caractérisé en ce que chaque élément de génération de signaux de mesure est conçu de façon à prendre en charge la fonction de l'élément de génération de signaux de mesure d'une zone de mesure adjacente, si une condition de défaut apparaît dans le traitement de signal de l'élément de génération de signaux de mesure mentionné en dernier.

11. Relais de distance selon l'une quelconque des revendications 8 à 10, caractérisé en ce que l'unité de commande centrale est conçue de façon à bloquer tout élément de génération de signaux de mesure qui manifeste une condition de défaut dans son traitement de signal.

12. Relais de distance selon l'une quelconque des revendications 8 à 11, caractérisé en ce que l'unité de commande centrale est conçue de façon à fournir un signal d'alarme (ALARM) par l'intermédiaire du premier élément OU si une condition de défaut se produit dans le traitement de signal de l'un quelconque des éléments de génération de signaux de mesure.

13. Relais de distance selon l'une quelconque des revendications 8 à 12 précédentes, caractérisé en ce que les éléments de génération de signaux de mesure sont conçus de façon à produire un second signal fixé (F1, F2, F3) si, dans le cas d'un état correct dans le traitement de signal du relais de distance, il apparaît dans le système de distribution d'énergie électrique un changement critique qui peut nécessiter une action.

14. Relais de distance selon la revendication 13, caractérisé en ce qu'il comprend également des seconde, troisième et quatrième unités de retard (6, 7, 8), un second élément OU (9), un élément ET (10), un amplificateur (13) et une unité qui fournit un signal de blocage inversé ($\overline{BLOCK}$), et en ce que le relais de distance est conçu de façon à mettre en oeuvre une fonction de déclenchement (TRIP R, TRIP S, TRIP T), par l'intermédiaire des seconde, troisième et/ou quatrième unités de retard, du second élément OU, de l'élément ET et de l'amplificateur, si un second signal fixé est présent après qu'un défaut a été détecté dans le traitement de signal dans l'unité de commande centrale, et jusqu'à ce que ce défaut soit éliminé.

FIG.2

FIG.1